Europäisches Patentamt

European Patent Office                    (11) Numéro de publication:                    **0 348 277**

Office européen des brevets                                                              **A2**


## (12) DEMANDE DE BREVET EUROPEEN


(21) Numéro de dépôt: **89401691.4**                      (51) Int. Cl.⁴: **F 16 B 19/08**
                                                              **B 60 J 3/02**
(22) Date de dépôt: **16.06.89**

(30) Priorité: **21.06.88 FR 8808273**

(43) Date de publication de la demande:
**27.12.89 Bulletin 89/52**

(84) Etats contractants désignés: **DE ES FR GB IT**

(71) Demandeur: **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur: **Demichel, Guy**
**I.U.T. D'Orsay Boîte Postale No. 23**
**F-91406 Orsay Cédex (FR)**

**Bouret, Fabrice**
**82, Rue Pasteur**
**F-08150 Rimogne (FR)**

(74) Mandataire: **Fabien, Henri et al**
**PEUGEOT SA. Propriété Industrielle 18, rue des**
**Fauvelles**
**F-92250 La Garenne-Colombes (FR)**

(54) Dispositif de fixation d'une pièce sur un panneau.

㊗ La présente invention a pour objet un dispositif de fixation
d'un élément sur un panneau, par exemple une embase (1) de
pare-soleil sur un élément de carrosserie d'un véhicule
automobile.

Sur l'embase (1) est monté un rivet (3) et l'ensemble,
éventuellement monté sur la garniture de pavillon (16), est
améné au contact d'une contre-tôle (17), les pattes (19) du rivet
passant à travers une ouverture (18) prévue dans cette
contre-tôle. Les pattes (19) sont reliées au corps du rivet par
des zones de faible épaisseur (20) ayant une forme telle que,
lors de l'introduction de la vis (8) dans le passage (13) par
translation, elles pivotent d'environ 90° pour venir en appui sur
la face arrière de la contre-tôle (17).

Application à l'industrie automobile.

FIG. 2

EP 0 348 277 A2

## Description

### DISPOSITIF DE FIXATION D'UNE PIECE SUR UN PANNEAU.

L'invention a pour objet un dispositif de fixation d'un élément sur un panneau utilisable notamment, mais non exclusivement, pour fixer une embase de pare-soleil sur un élément de carrosserie d'un véhicule automobile.

En général, à l'heure actuelle, les embases de pare-soleil sont fixées par vissage. Pour cela, on met d'abord en place un logement de vis sur la partie avant du pavillon du véhicule. La garniture de pavillon est ensuite mise en place et fixée, par exemple par collage. Puis, on positionne l'embase du pare-soleil en face du logement de vis et on effectue la fixation du pare-soleil par vissage. Comme il y a généralement deux à trois vis par embase, l'ensemble du processus de fixation demande un temps important en ligne de montage finale du véhicule, ce qui augmente le coût de fabrication de celui-ci.

L'invention a pour but de remédier à ces inconvénients en proposant un dispositif de fixation qui permet de mettre en place et de fixer le pare-soleil d'une manière simple et rapide. De plus, le dispositif objet de l'invention permet de mettre en place et de fixer simultanément la frise avant de la garniture de pavillon et les deux pare-soleil par un même mouvement de translation, le tout pouvant être effectué à l'aide d'un robot. Il permet également de prémonter l'ensemble constitué par la garniture de pavillon, le pare-soleil et le système de fixation en dehors de la ligne de montage, ce qui entraîne un gain de temps appréciable, et il ne nécessite pas un positionnement très précis du point de fixation.

Plus précisément, l'invention a pour objet un dispositif de fixation d'un élément sur un panneau à l'aide d'une pièce en forme de rivet ayant des pattes qui passent à travers une ouverture ménagée dans le panneau et s'écartent les unes des autres lors de l'introduction d'un axe rigide dans un passage prévu à cet effet.

Selon l'invention, les pattes ont une forme telle que, lors de l'introduction de l'axe rigide, elles pivotent d'un angle de 90° environ pour venir en appui sur la face arrière du panneau.

Dans la présente description, l'expression ≪face arrière du panneau≫ désigne la face du panneau opposée à celle sur laquelle est fixé ledit élément.

On comprend qu'on obtient ainsi un maintien efficace de l'élément sur le panneau puisque chacune des pattes est en appui contre la face arrière de ce dernier sur une partie importante de sa longueur. De plus, il n'est pas nécessaire d'avoir un positionnement très précis puisque, même si l'axe du rivet est décentré par rapport à celui de l'ouverture, chaque patte sera malgré tout en appui sur la face arrière du panneau, même si certaines ne sont en appui que sur une faible partie de leur longueur.

Selon une autre caractéristique du dispositif objet de l'invention, les pattes sont reliées au corps du rivet par des zones de faible épaisseur jouant le rôle de charnières.

De préférence, ces zones de faible épaisseur ont une forme développable afin de pouvoir se courber sans créer de zones de concentration de contraintes.

L'expression ≪forme développable≫ signifie que ces zones de faible épaisseur ont une forme telle qu'elles puissent se plier sans modification sensible de leur longueur dans le sens du pliage: elles peuvent donc être pliées et dépliées plusieurs fois pratiquement sans risque de rupture. Dans la forme de réalisation préférée, ces zones sont planes lorsque l'axe rigide n'est pas dans ledit passage.

Selon une autre caractéristique intéressante du dispositif objet de l'invention, l'axe rigide peut être extrait de son logement, rendant ainsi ledit élément démontable.

L'axe rigide peut être une tige filetée. Dans ce cas, la partie des pattes voisine des zones de faible épaisseur peut présenter avantageusement un becquet apte à retenir la tige filetée une fois celle-ci mise en place. Si la tige filetée constitue le corps d'une vis, celle-ci peut être mise en place par simple poussée et extraite par dévissage, les becquets servant de guides.

L'invention apparaîtra mieux à la lecture de la description qui va suivre, donnée à titre d'exemple non limitatif, en référence aux dessins annexés dans lesquels:

- la Figure 1 est une vue schématique en coupe verticale montrant l'ensemble constitué par une embase de pare-soleil, la garniture de pavillon et le dispositif de fixation avant fixation,

- la Figure 2 est une vue semblable à la figure 1 montrant le même ensemble après fixation, et

- la Figure 3 est une vue semblable aux figures 1 et 2 montrant les possibilités de compliance du dispositif objet de l'invention.

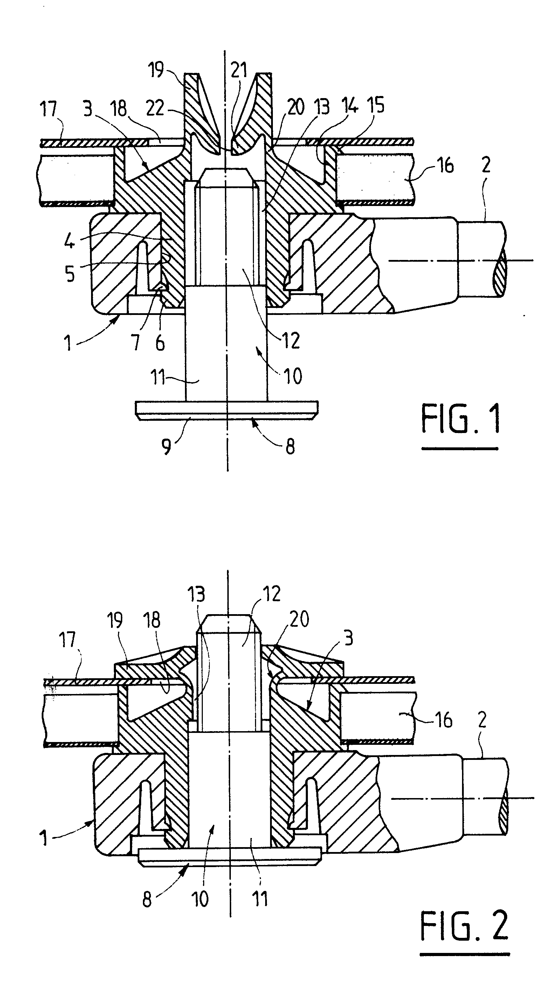

La Figure 1 représente schématiquement une embase de pare-soleil 1 qui constitue l'extrémité d'un axe sensiblement horizontal 2 sur lequel le pare-soleil (non représenté) est monté à rotation. Pour mettre en place sur le véhicule, en ligne de montage finale, l'ensemble constitué par le pare-soleil et la garniture de pavillon, on procède de la manière suivante:

En dehors de la ligne de montage, on monte sur l'embase 1 un rivet 3, par exemple en matière plastique. Le rivet 3 présente, à sa partie inférieure, une partie cylindrique 4 apte à pénétrer dans un logement cylindrique 5 de même diamètre prévu sur l'embase 1: cette disposition permet de faire pivoter l'embase 1 autour du rivet 3, donc de faire pivoter le pare-soleil autour d'un axe vertical lorsque l'ensemble est mis en place dans le véhicule. La fixation du rivet 3 sur l'embase 1 est réalisée par clippage grâce à un bossage 6 à la partie inférieure du rivet qui se clippe sur une partie 7 de l'embase 1. Cette partie 7 peut se trouver sur une partie de l'embase en forme de couronne mince.

Dans la suite de la présente description, l'axe de la partie 4 sera appelé <axe du rivet> car, dans l'exemple décrit, le rivet présente une symétrie de révolution.

On met ensuite en place l'axe rigide qui est constitué par la partie filetée d'une vis 8 ayant une tête 9 et un corps 10. Dans le cas particulier décrit ici, celui-ci comporte une partie non filetée 11 du côté de la tête 9 et une partie filetée 12 à l'autre extrémité. La vis 8 est introduite, par son extrémité filetée, dans un passage 13 ménagé à l'intérieur du rivet 3, ce passage 13 étant cylindrique et de même axe que le rivet.

Le maintien de la vis 8 dans le passage 13 peut se faire par simple adhérence, la partie 11 du corps 10 étant introduite à force dans le passage (dans le cas particulier décrit ici, le diamètre de la partie filetée 12 est inférieur à celui de la partie 11). Il est également possible de réaliser ce maintien par clippage au niveau de l'entrée du passage 13. Enfin, on peut encore envisager un axe fileté venu de moulage avec le rivet 3 auquel il est relié par un film mince qui se brisera lors de l'introduction à force de l'axe dans le rivet.

L'étape suivante consiste à monter l'ensemble constitué par l'axe du pare-soleil, le rivet 3 et la vis 8 sur la partie antérieure ou frise avant de la garniture de pavillon. Pour cela, on a prévu à la partie supérieure du rivet 3 une couronne cylindrique 14 de faible épaisseur et de même axe que le rivet. Cette couronne 14 présente un ou plusieurs becquets 15 permettant de pincer la garniture de pavillon 16 et de maintenir le rivet 3 sur cette dernière par clippage. La garniture 16 est donc maintenue entre le ou les becquet(s) 15 et des épaulements prévus soit sur le rivet 3, soit sur l'embase 1.

Il est à noter que la partie du rivet 3 située entre la couronne 14 et la partie cylindrique 4 présente une forme telle qu'elle puisse venir en contact étroit avec l'embase 1 dans cette zone.

Toutes les opérations ci-dessus sont effectuées en dehors de la ligne de montage finale. Une fois qu'elles sont terminées, on amène la garniture à l'intérieur de la caisse du véhicule à l'aide d'un robot et, par une translation verticale de bas en haut pouvant également être effectuée à l'aide du robot, on amène la garniture en position contre la face intérieure du pavillon.

La position obtenue est celle qui est illustrée à la figure 1, la couronne 14 du rivet 3 étant en appui sur une contre-tôle 17 fixée au pavillon du véhicule. Une ouverture 18 pouvant être circulaire est ménagée dans la contre-tôle 17, ce qui permet le passage de pattes 19 prévues à l'extrémité supérieure du rivet et reliées au corps de celui-ci par des zones de faible épaisseur 20. Le diamètre de l'ouverture 18 est notablement supérieur à celui de l'espace occupé par les pattes 19 (par exemple le double) et le diamètre de la couronne 14 est supérieur à celui de l'ouverture 18.

Pour fixer définitivement l'embase 1 du pare-soleil, on utilise le robot pour enfoncer la vis 8 dans le passage 13 par un mouvement de translation verticale de bas en haut. Au cours de ce mouvement, l'extrémité de la partie filetée 12 opposée à la tête 9 vient en contact avec une extrémité 21 des pattes 19 qui se trouve à l'intérieur du passage 13. Le mouvement continuant, les pattes 19 s'écartent les unes des autres en pivotant autour des zones 20 qui jouent le rôle de charnières.

On arrive ainsi à la situation illustrée à la figure 2 où les pattes 19, après avoir pivoté de 90° environ, sont en appui sur la face arrière de la tôle 17 sur une partie importante de leur longueur.

Avantageusement, on peut prévoir sur les extrémités 21 des pattes 19 des becquets 22 aptes à pénétrer dans la gorge de la partie filetée 12. Ces becquets empêchent une extraction de la vis par translation, donc une extraction accidentelle, une fois que la vis est mise en place, mais il reste possible de l'extraire par dévissage, les becquets servant de guides. On peut donc, ultérieurement, démonter le pare-soleil si nécessaire.

Il est à noter que les zones de faible épaisseur 20 doivent pouvoir se plier sans créer de zones de concentration de contraintes. C'est pourquoi elles ont une forme développable, c'est-à-dire qu'elles peuvent se plier sans modification notable de leurs dimensions. Dans le mode de réalisation préféré, elles sont planes et leur plan est parallèle à l'axe du rivet lorsque celui-ci est dans la position de la figure 1. Elles peuvent donc revenir à leur état initial après extraction de l'axe rigide pratiquement sans risque de rupture.

Il est possible de réaliser une mise en contrainte de la fixation en modifiant le diamètre de la partie filetée 12 de la vis 8 et/ou la forme et les dimensions des pattes 19.

Le dispositif objet de l'invention présente des avantages multiples. En premier lieu, il permet un gain de temps appréciable en ligne de montage finale du véhicule pour deux raisons. Tout d'abord, il permet de réaliser le montage de l'ensemble constitué par l'axe du pare-soleil, le rivet et l'axe rigide sur la frise avant de la garniture en dehors de la ligne finale de montage, ce qui diminue le nombre d'opérations à faire sur celle-ci. Ensuite, cet ensemble peut être mis en place et fixé très facilement et rapidement sur le véhicule, la mise en place et la fixation pouvant être effectuées à l'aide d'un robot. En effet, une fois l'ensemble amené à l'intérieur de la caisse du véhicule, il suffit d'une translation verticale de bas en haut pour l'amener en position et d'une poussée dans la même direction pour mettre en place la vis 8 et écarter les pattes du rivet, ce qui évite des opérations de vissage beaucoup plus longues. On peut encore noter que ces opérations de fixation peuvent être effectuées pendant la polymérisation de la colle utilisée pour fixer la garniture sur le pavillon, ce qui évite d'allonger la durée de fabrication du véhicule.

Cependant, le principal avantage du dispositif de fixation objet de l'invention reste sa très grande compliance qui permet de réaliser la fixation même si le positionnement n'est pas très précis.

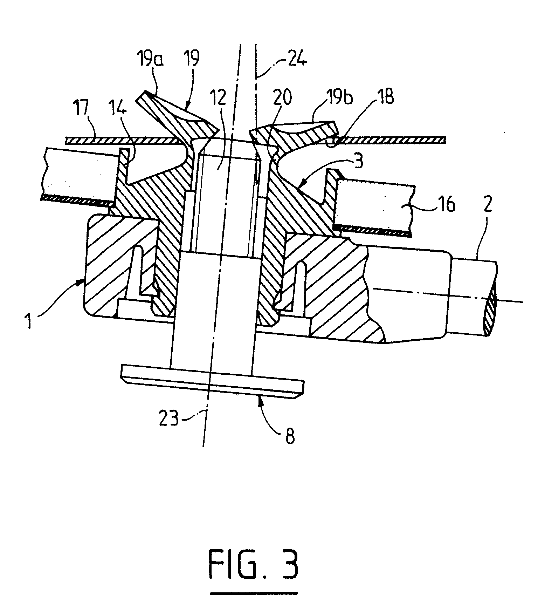

Ceci est illustré à la figure 3 où l'on voit que l'axe 23 du rivet (et donc de la vis 8) n'est pas confondu avec l'axe 24 de l'ouverture 18, comme c'est le cas sur les figures 1 et 2. Par rapport à l'axe 24, l'axe 23 est décalé vers la gauche en regardant la figure 3 et il fait un angle avec celui ci. La conséquence est que la couronne 14 n'est plus en appui homogène sur la contre-tôle 17. En effet, ou bien elle n'est plus en contact du tout avec la contre-tôle (cas de la figure 3), ou bien le contact n'a lieu que sur une partie de son pourtour. Cependant, on aura malgré tout un appui suffisant une fois la vis 8 mise en place car chaque patte 19 sera en appui sur la face arrière de la contre-tôle 17 sur au moins une partie de sa longueur. Par exemple, la patte 19a, située du côté gauche en regardant la figure 3 et qui se trouve au bord de l'ouverture 18, sera en appui sur la presque totalité de sa longueur tandis que la patte 19b, située du côté droit et éloignée du bord de l'ouverture 18, ne sera en appui que sur une faible partie de sa longueur, à son extrémité opposée à la zone de faible épaisseur 20. La mise en équerre des pattes 19 tend à ramener l'axe du rivet suivant une direction perpendiculaire à la contre-tôle 17. Si la garniture 16 est suffisamment souple, ceci aura pour effet de mettre la couronne 14 en appui sur la contre-tôle: l'axe 23 du rivet sera parallèle à l'axe 24 de l'ouverture 18, mais décalé par rapport à celui-ci. Si la garniture est plus rigide, l'appui de la couronne 14 risque d'être incomplet. De toute façon, ceci n'est pas gênant car les efforts exercés sur les pare-soleil sont généralement peu importants en utilisation normale.

Enfin, il est bien entendu que l'invention ne se limite pas au seul mode de réalisation qui vient d'être décrit mais qu'on peut imaginer de nombreuses variantes sans sortir pour autant du cadre de l'invention, notamment en ce qui concerne la forme et les dimensions des différentes parties du rivet 3 et de l'embase 1.

## Revendications

1 - Dispositif de fixation d'un élément (1) sur un panneau (17) à l'aide d'une pièce en forme de rivet (3) ayant des pattes (19) qui passent à travers une ouverture (18) ménagée dans le panneau (17) et s'écartent les unes des autres lors de l'introduction d'un axe rigide (12) dans un passage (13) prévu à cet effet en pivotant d'un angle de 90° environ pour venir en appui sur la face arrière du panneau (17), caractérisé en ce que la pièce en forme de rivet (3) comporte en outre une couronne (14) entourant lesdites pattes (19), cette couronne (14) étant de dimensions supérieures a celles de l'ouverture (18) et étant apte à pincer ledit panneau (17) entre elle-même et les pattes (19) une fois l'axe rigide (12) mis en place.

2 - Dispositif de fixation selon la revendication 1, caractérisé en ce que les pattes (19) sont reliées au corps du rivet (3) par des zones de faible épaisseur (20) jouant le rôle de charnière.

3 - Dispositif de fixation selon la revendication 2, caractérisé en ce que lesdites zones de faible épaisseur (20) ont une forme développable afin de pouvoir se courber sans créer de zones de concentration de contraintes.

4 - Dispositif selon la revendication 3, caractérisé en ce que les zones de faible épaisseur (20) sont planes en l'absence dudit axe rigide (12).

5 - Dispositif selon l'une quelconque des revendications 1 à 4, caractérisé en ce que l'axe rigide (12) peut être extrait de son logement, rendant ledit élément (1) démontable.

6 - Dispositif selon l'une quelconque des revendications 1 à 5, caractérisé en ce que l'axe rigide (12) est une tige filetée.

7 - Dispositif selon la revendication 6, caractérisé en ce que la partie des pattes (19) voisine des zones de faible épaisseur (20) présente un becquet (22) apte à retenir la tige filetée (12) une fois celle-ci mise en place.

8 - Dispositif de fixation d'une embase (1) de pare-soleil sur un élément de carrosserie d'un véhicule automobile, caractérisé en ce que ce dispositif de fixation est conforme à l'une quelconque des revendications 1 à 7, une contre-tôle (17) fixée audit élément constituant le panneau précité.

9 - Dispositif selon la revendication 8, caractérisé en ce que ladite couronne (14) présente au moins un becquet (15) apte à pincer une garniture de pavillon (16).

FIG. 1

FIG. 2

FIG. 3